# EUROPEAN PATENT APPLICATION

(11) **EP 0 710 909 A1**
(43) Date of publication of application: **08.05.1996**
(21) Application number: 95307486.1
(22) Date of filing: 20.10.1995
(51) Int. Cl.: G06F 9/44

(54) **An application development environment system, and run-time execution engine**

(30) Priority: 20.10.1994 US 326779
(71) Applicant: BOSTON TECHNOLOGY INC., Wakefield, Massachusetts 01880 (US)
(72) Inventor: Deigh, Anthony Nicholas, Groton, Massachusetts (US); Meade, John J., Marblehead, Massachusetts (US)
(74) Representative: Skone James, Robert Edmund

(57) **Abstract**

The system allows a developer to graphically create an operation flow diagram of interconnected objects. The system produces an associated operation object script. A run-time engine selects precompiled code for performing each operation at the time the flow diagram is processed when the application is executed. The application's objects can exist and run on two or more computers which are connected via a network.

## Description

### REFERENCE TO APPENDIX

An appendix including source code for this application is attached hereto and a part hereof.

The present invention is directed to a distributed platform message system which includes an application development environment and run-time execution engine with objects distributed over plural physical machines and, more particularly, to a system in which a message application developer can designate objects without regard to the hardware architecture using a graphic interface to create an application flow diagram.

Message storage and retrieval platforms, such as described in U.S. patent 5,029,199, typically have software custom written for various applications performed by the platforms such as voicemail, bulletin boards, etc. Each time a new application is required software designers must provide a new solution that fits the architecture and the existing software. As such platforms grow in complexity and size the task of adding new applications becomes more complex, time consuming and costly.

Software systems exist today which make the design of complex interrelated systems easier. These systems are called object oriented systems where an object includes data and the processes necessary to operate on the data to accomplish the function of the object. However, such systems include the data and the processes which act upon that data within a single machine. When new applications are created using existing objects the objects must be linked and compiled together to create compiled code.

In developing new applications, especially in cases where unsophisticated users with little or no software coding experience are involved, the systems that require compiling and extensive software experience are not particularly easy to use or cost effective in application development.

What is needed is a system in which objects can exist across hardware boundaries and new applications can be developed for existing code without requiring the knowledge associated with detailed computer operations, such as compiling. What is also needed is a system that allows existing code to be executed in any desired order consistent with its location within an object. What is further needed is an environment in which applications can be developed without requiring sophisticated programming knowledge.

According to a first aspect of the present invention, there is provided an application development system comprising means for creating an operation list using flow diagrams of objects; and means for executing code specified by the operations of the list.

According to a second aspect of the present invention, there is provided a distributed object platform comprising a first computer including a first process and first data of a processing object designatable by a user; and a second computer connected to said first computer and including a second process and second data of the processing object designatable by a user.

According to a third aspect of the present invention, there is provided an application development process comprising selecting graphical objects representing operations to be performed; placing the objects within a flow diagram of an application to be performed; generating a list of the operations of the application; and executing precompiled code responsive to the list when the application is executed.

According to a fourth aspect of the present invention, there is provided a distributed object method comprising performing operations of a processing object in and on data of a first computer; communicating a data request of the processing object by the first computer to a second computer; performing operations of the processing object in and on data of the first computer responsive to the request and forwarding response data to the first computer; and performing operations of the processing object in the first computer on the response data.

The present inventions typically provide an environment in which applications can be developed by merely graphically linking objects.

The present inventions typically provide a system in which existing code can be linked and executed through an operation path of object operations.

The present inventions typically allow creation of an application that is comprised of objects where the applications need not be compiled.

The present inventions typically provide a system in which software objects have components (data or processes) located in different computers.

The present inventions typically provide a system with which users who have little knowledge about software can develop applications.

The present inventions typically provide objects that do not require compiling for execution.

Typically, the present inventions provide a system in which the data and processes of a software object exist in two or more computers and in which portions of the process located in different computers communicate over a network connecting the computers to exchange the data of the object and accomplish the function of the object. The system allows a developer to designate an object without regard to the hardware architecture. The system allows the developer to develop an application by creating an operation flow diagram of designated objects. The flow diagram is used to produce an associated operation object script. A run-time execution engine selects appropriate precompiled code for performing the operation at the time the flow diagram is interpreted and when the application is executed.

These together with other objects and advantages which will be subsequently apparent, reside in the details of construction and operation as more fully hereinafter described and claimed, reference being had to the accompanying drawings forming a part hereof, wherein like numerals refer to like parts throughout.
Figure 1 depicts an object flow diagram;
Figure 2 is a block diagram of a system to which the present invention is applied;
Figure 3 illustrates a message object distributed across several different computers;
Figure 4 illustrates a message object within a flow diagram;
Figure 5 illustrates a flow operation list interpretation and execution;
Figure 6 depicts the relationship of descriptors;
Figure 7 depicts dynamic linking; and
Figure 8 depicts a single operation within an application.

The present invention is a C++ based application development environment system that allows non-programmers to specify and develop full-featured applications for distributed platform systems, such as described in U.S. patent 5,029,199 incorporated by reference herein also found in COACCESS 6.5 available from Boston Technology Inc. of Boston, Massachusetts. Using the invention applications such as voice mail, bulletin board, fax/interactive voice recognition, and any other application that can run on such a system can be specified visually using objects. Once specified and tested, the application can be packaged along with existing voice prompt data and implemented on such a distributed platform system.

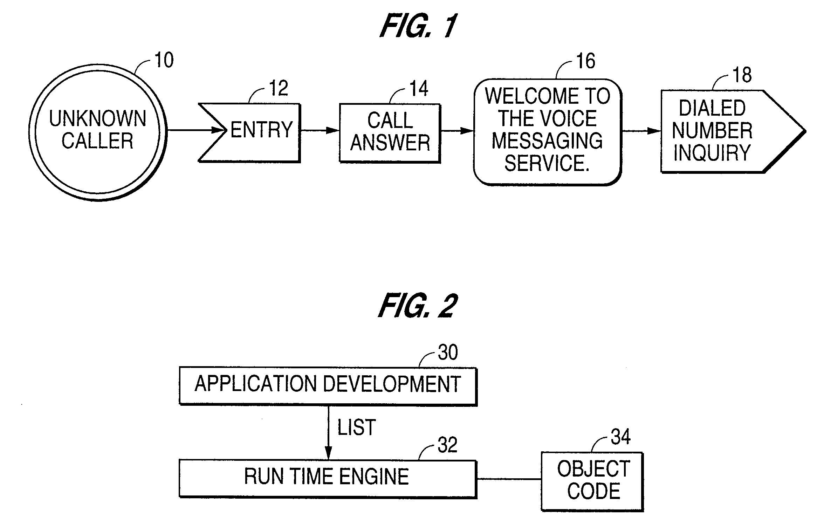

Using the invention, the application writer specifies an application by "drawing" it as a series of call flow diagrams. Each call flow diagram is a group of related operations that performs a specific task. For example, a call flow diagram might describe all the operations required to answer an incoming call, play a greeting prompt, then exit to another call flow diagram specified elsewhere in the application to record a message, such as illustrated in figure 1, and which will be discussed in more detail later herein. An appendix is included herewith that includes source code which performs the operations described herein.

In the present invention, an object is a container that is hardware independent and spread across multiple hardware components and that groups related operations and data into a single entity. Objects are entities that relate, for example, to call processing components, such as Call, Message, Mailbox, Recording, and other entities related to call processing. These objects provide the operations and data required to specify and build applications.

An operation performs an action in a flow diagram. The Call object, for example, contains operations to answer a call, record a call, release a call, and a number of other operations related to processing a call. An object may also contain operation parameters that supply data values required by an operation. For example, the Pause operation of the Call object requires a Duration parameter value that specifies the length of time the application will wait for a caller to perform some action before the application moves on to another operation. Operation parameters, can be a boolean, integer, floating string value or logical or mathematical expressions and can be defined by the application writer. The value of the Duration parameter is an integer. Operation parameters can have default values that can be accepted or changed by the application writer.

In addition to operations and data parameters, an object may also hold and maintain a number of object attributes that can be used by an operation to retrieve a run-time value from a particular instance of an object. An object attribute contains a boolean, integer, or string value that is updated and maintained during application execution. For example, a Mailbox Full? attribute can maintain a True or False boolean value for a particular instance of the Mailbox object. The application writer can use these run-time values to override operation parameter values for a particular operation. The "Mailbox Full?" attribute value can be used, for example, as the value for a parameter of a Gate Operation which is a branch yes/no or flow control operation.

The present invention also provides a number of objects that serve as general purpose objects that can be used for call flow functions. The Counter object, for example, contains operations that allow you to keep track of retry attempts made by a caller and for any other counting purpose. A Mousetrap object may be used to set or reset a flag under a certain set of circumstances, then query the status of the flag under other circumstances.

In the present invention, an object is displayed as an icon on an object palette. An application writer selects an operation from an object's operation menu. Once an operation has been selected, it is displayed as a shape within a main screen area of a display. If the operation requires a definition of operation parameters, a dialog box appears in the main screen area requesting that the writer supply a value or select a default or run-time attribute value. If the operation requires instances of other objects to be created as a result of the operation, another dialog box appears requesting that the result object be named.

Each instance of an object is given a unique name within an application by the application writer and can be used as required by the application. For example, operations contained by one instance of the Counter object can be used to count the number of times a caller attempts to enter a valid mailbox number. Another instance of the Counter object may be used to count the number of times a subscriber attempts to enter a valid passcode. A result object is one that is created and added to an object palette as the result of an operation. The operations contained by the result object are required by the application to process the result of the operation. A Mailbox object, for example, is created and added to an object palette as a result of a Get Mailbox operation from the Call object. The Get Mailbox operation retrieves a mailbox requested by a caller. The application then needs the operations contained by the Mailbox result object to allow the caller to perform operations on the mailbox, such as retrieving messages from the mailbox.

An application in accordance with the present invention is a series of flow diagrams, each of which is specified, or drawn. A flow diagram is built by selecting operations and defining the data parameters and object attributes required by the operation. Each operation has at least one exit path from which the flow transfers after the operation has been executed. These exit paths connect operations to each other in the flow diagram. The flow diagrams specified on what could be considered different pages or subsets of the application can be connected to each other through the use of connectors.

Figure 1 shows a typical sample flow diagram for part of the processing associated with a telephone call type message. The first operation 10 specified in an application is a special operation called a service entry point, which is represented graphically as a double circle. A service entry point defines the point at which a caller, subscriber, or other application enters the application. Every application has at least one service entry point. An application, however, may have more than one service entry point from which it can be accessed. The exit path from the service entry point is represented by an arrow and is connected to a page label operation 12. The page label, like the service entry point, serves as an entry point into a page of the application. Every page in an application must have at least one page label but may contain more than one. The exit path from the page label operation connects to the call answer operation 14, which is specified from a call object. The call answer operation 14, as its name implies, answers an incoming call. After the call has been answered, control is passed to a play voice prompt operation 16 through the call answer 14 exit path. Like the call answer operation 14 the play voice prompt operation 16 is selected from the call object. The prompt that is played is selected from an existing prompt repository that resides on the system. The text of the prompt that is played appears within the play voice prompt operation graphic.

Once the greeting prompt has been played, control is passed to another operation 18 called a page connector. A page connector-connects the call flow defined on this page with a call flow defined on another page or, in some cases, to a call flow defined on the same page.

Once an application has been specified or developed in an application development environment 30 (See Figure 2) by creating the flow diagram, an operation list is created with each entry in the list specifying the operation and any parameters associated with that operation. A run-time or execution engine 32 executing on the distributed platform receives the list and when the application is initiated, the engine 32, interprets the list, fetches and/or executes preexisting object code 34 from a storage, such as a disk drive, and executes the code to perform each of the operations. A more detailed discussion of this procedure is provided later.

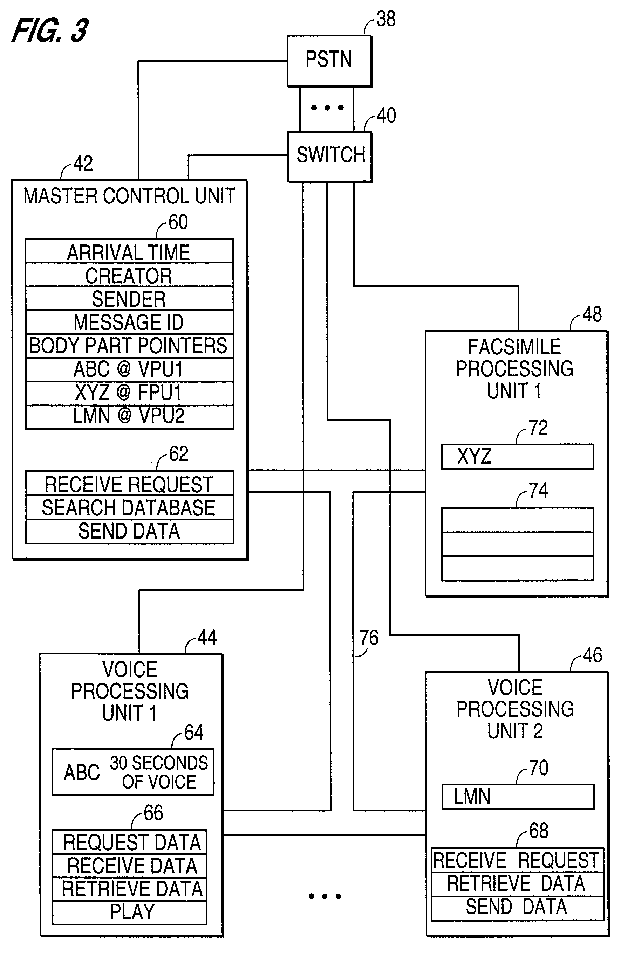

The system of the present invention, for a call processing type application, includes many different types of objects including: 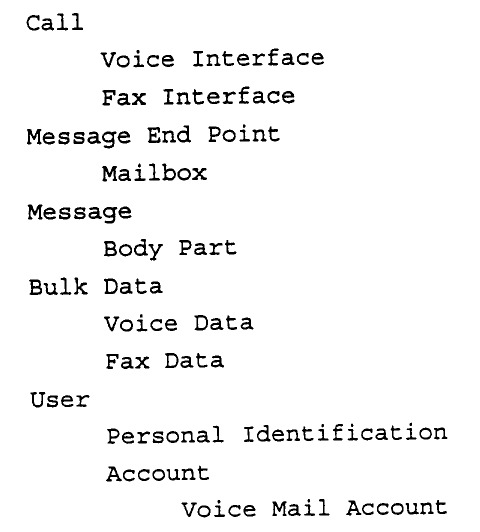 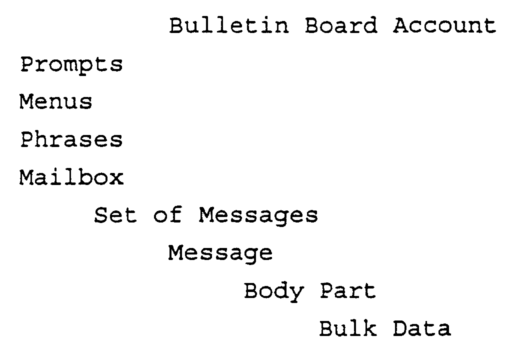
As previously mentioned the present invention places different components (data and processes) of each object in different physical hardware or different computers. This is illustrated in figure 3. The hardware, which is described in more detail in the U.S. Patent previously mentioned, includes a digital switch 40 coupled to the public switched telephone network (PSTN) 38. Switching by the switch 40 is controlled by a master control unit (MCU) 42. The switch 40 routes message transactions, such as an incoming message call or a call by a subscriber to retrieve messages, to one of several voice processing units (VPU) 44 and 46 or other types of message processing units, such as a facsimile processing unit (FPU) 48 or a bulletin board processing unit (not shown). Each processing unit 44, 46 and 48 as well as the master control unit 42 is a computer system with associated storage and also includes the appropriate interface to allow the unit to perform the designated function. For example, the voice processing units 44 and 46 include voice cards which allow storage of voice messages as data and the facsimile unit 48 includes facsimile cards with a corresponding facsimile function. The computers 42, 44, 46 and 48 are connected by a conventional network 76 and communicate using conventional network protocols and processes.

For purposes of brevity and illustration, the architecture of the distributed objects according to the present invention will be described with respect to a Message object. The Message object contains the operations required to play, save, delete and send mailbox messages. These operations include playing a message, resetting a play position, fast forwarding the message, rewinding the message, marking the message for erasure, marking the message to save it and getting the time and date of receipt of the message. Other objects have a similar distributed structure. Figure 3 illustrates how a message object (some of the data and some of the processes) is distributed over the computers 42, 44 and 46 for messages of a subscriber that include message ABC which is a 30 second voice message, message XXZ which is a two page G3 encoded facsimile and LMN a second 30 second voice message. As illustrated in figure 3, the message object includes a data component 60 in the MCU 42 which includes data on arrival time, message creator and sender, message identification and message body part pointers. The MCU 42 also includes processes 62 for receiving a data request from a process, such as when a mailbox object requests the location of the next message, for searching the data 60 for requested information and for sending the data to the process. The first voice processing unit 44 includes the ABC voice message as a data component 64 and processes 66 which are for operations of requesting data from another computer, receiving the data and playing a message. The second voice processing unit 46 includes the same processes 68 and a data component 70 including the LMN voice message. The fax processing unit 48 also includes a data component 72 and appropriate processes 74.

The process components 62, 66, 68 and 74 as well as the data components 50, 64, 70 and 72 are all included within the Message object.

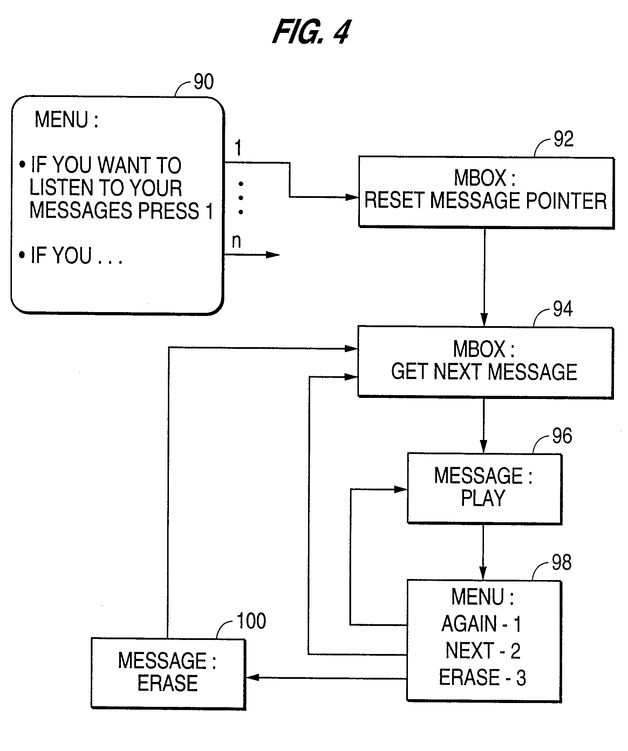

Figure 4 illustrates how the message object would appear within a part of a flow diagram developed by an application developer for processing a telephone call message retrieval type transaction. The operations depicted in figure 4 are situated somewhere within a voice application. The first object is an instance of a Menu object 90 which plays a menu of choices to a subscriber and receives the touch tone responses. This operation is performed by the VPU 44 assuming that this is the VPU which executes the application. The response governs which of the exit paths from the object the flow takes. In the present example it is assumed that the play messages exit path is taken. An instance of the Mailbox object 92 performs the operation of resetting the pointer to the messages for the subscriber. The Mailbox object instance 94 is a different (instantation) of the Mailbox with the function or operation of getting the next message in the subscriber's messages. This operation involves the VPU 44 requesting the address of the next message from the MCU 60 with the message pointer as one of the parameters of the request. The MCU responds with the address of the next message, such as ABC @ VPU1. The next object is the Message object 96 with the operation play. This operation uses the address provided by the mailbox object 94 to retrieve the voice data of the ABC message stored on the VPU 44 and then play that message out to the subscriber through the switch 40. Once this operation is completed the next object is a different instance 98 of the Menu object which plays different choices to the subscriber. If the subscriber determines that the message should be erased based on the prompt and a touch tone 3 is entered, control transfers to the erase instance 100 of the message object. The operations associated with an erase are not shown. When the erase is finished the control transfers to the next message Mailbox instance 94. If the user has decided to listen to only voice messages, the next message object obtains the address of the message LMN @ VPU 2 from the MCU. The Message object 96 process in the VPU 44 for obtaining data from other computers then requests the LMN message data from VPU 46 over the network 76. VPU 46 responds by retrieving the data and sending the data to VPU 44 which plays the message to the subscriber. As can be seen the message object includes the operations or processes distributed among various computers that are necessary to retrieve distributed data blocks and provide them to the subscriber. That is, the application writer need not be concerned with the distributed hardware architecture.

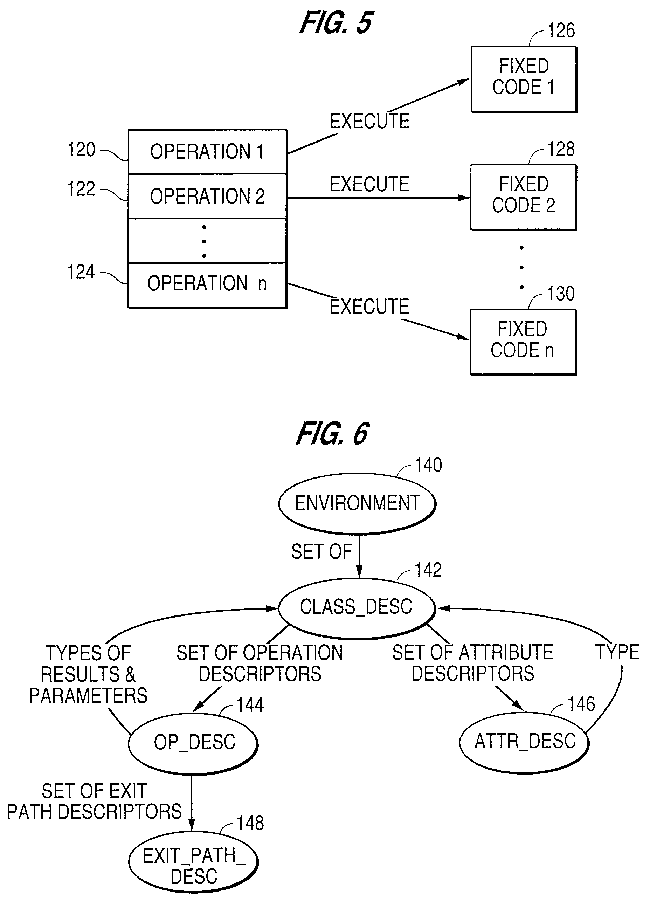

The flow diagram of figure 4 would produce an operation list which is then processed to determine which of fixed object code blocks will be executed. As illustrated in figure 5, the interpretation of each operation 120, 122 or 124 results in a corresponding block 126, 128 or 130 of fixed object code being executed. The objects essentially encapsulate software primitives both data and processes that already exist within each computer and among the computers of the distributed platform.

In implementing the present invention a set of conceptual types, called application development environment (ADE) classes, are provided by the creator of the environment to an application developer to use in constructing applications. Each ADE class defines the operations and attributes that each object of that type supports.

An operation is something that the object does; it can be used as a step in a call flow. Each operation is represented by a symbol in the graphical interface of the ADE. By definition, each operation is an operation on some ADE object, called its owning object. Each operation has certain required and certain optional parameters, may produce one or more results, and has zero or more exit paths. Each parameter must be of the appropriate type, which can be either a simple type - integer, float, boolean, string, or prompt - or an ADE class. Each result is of a ADE class type.

An attribute is a value that the object supplies; it can be used in an expression, which can be used as the value of a parameter of an operation. An attribute has a simple type, which is one of integer, float, boolean, or string.

To create a ADE class, the environment developer uses a special tool called CDEFINE. The developer creates a description of the class, including all of its operations and attributes. A sample ADE class description is set forth below. 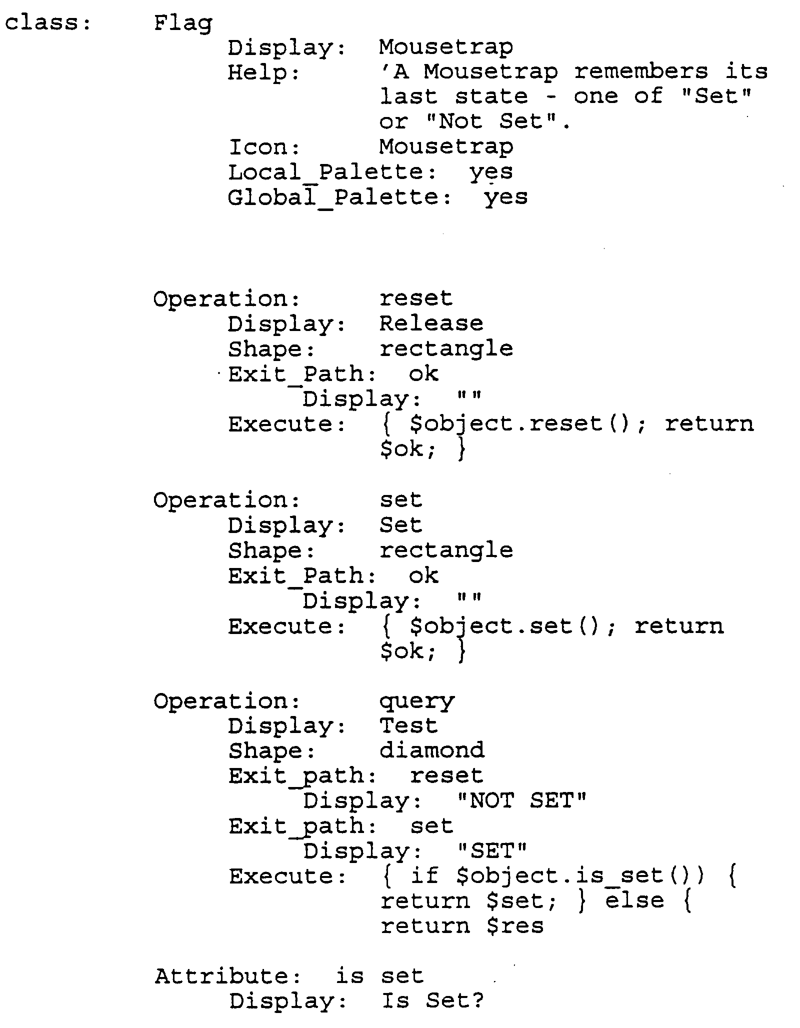 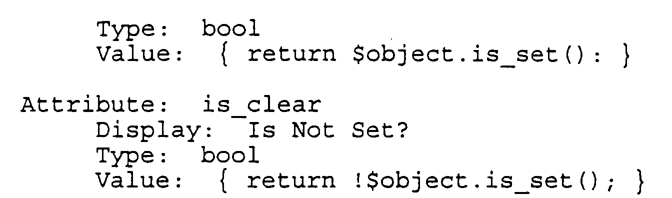
The description of an operation includes the C++ code that is to be executed when that operation is executed as part of a call flow. The description of an attribute includes the C++ code that computes its value when it is needed during the execution of a call flow. This description is parsed by CDEFINE and it creates the C++ source code for an interlinked set of C++ objects, called descriptors, that describe the class, its operations, their parameter, results, and exit paths, and the class' attributes. Figure 6 depicts the relationship of these descriptors to one another. As depicted in figure 6 an environment descriptor 140 includes a set of class descriptors 142 and the class descriptors 142 include object 144 and attribute 146 descriptors. The object descriptors 144 include exit path descriptors 148. Note that the C++ object-oriented technique of inheritance is used to create these descriptors. This allows them to contain customized C++ code as well as data.

Once all of the ADE class descriptions are written, environment developer writes a description of the environment listing all of the ADE classes. This description is also parsed by CDEFINE, and from this it creates the C++ source code for a descriptor for the environment. This environment descriptor contains the set of descriptors from all ADE classes in the environment.

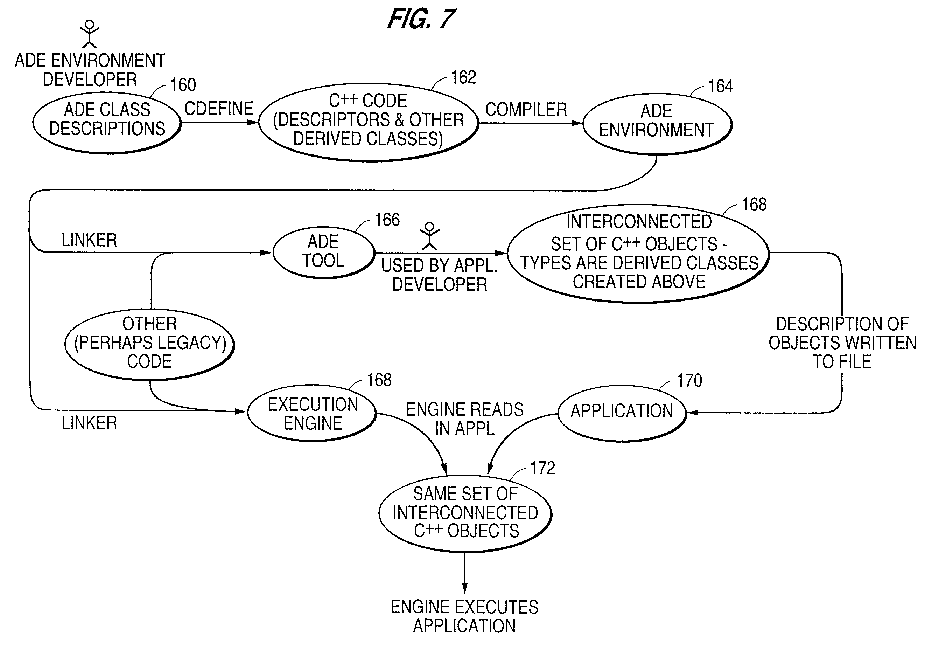

All of these descriptors are then compiled and linked with any other needed code that is referenced in the operations or attributes within the environment. This combination is then linked with or dynamically loaded into a copy of the ADE. This process is depicted in Figure 7.

As illustrated the application developer creates 160 the class descriptors which are then used to produce 162 appropriate code. The code is compiled into the environment 164 which is linked both to the ADE development tool 166 and the engine 168. If needed other existing or legacy code is also linked to these processes. The tool is used by the application developer to create 168 the interconnected objects (the flow diagrams like in figure 4). These are then stored as the application 170. During execution the engine 168 reads in and creates 172 the same set of objects which are then executed.

By scanning the descriptors, the ADE is able to provide 166 a graphical representation of the environment, listing all available ADE classes. Once an application developer creates a ADE object within his application, the ADE uses the descriptors for the corresponding ADE class to provide lists of operations for that ADE object. By selecting from these, and a small number of control flow operations, the application developer creates 168 the call flow of the application.

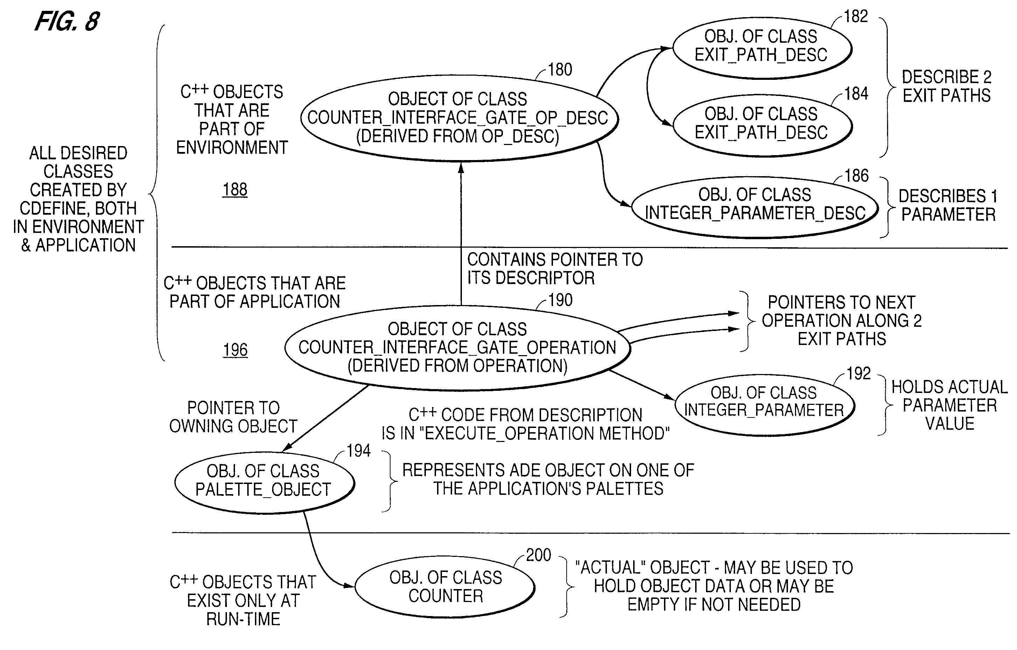

As the application developer is doing this, the ADE creates C++ objects that represent each element of the application - the ADE objects, the operations, their parameters, etc. Some of these objects are created by asking the corresponding descriptor to do the work of creating the object; others are generic and are created by the ADE. These interlinked objects, in conjunction with the descriptors, completely define the application. Figure 8 depicts the set of C++ objects that represent a single operation within an application, along with the associated descriptors and run-time object. As can be seen objects 180, 182, 184 and 186 are objects of the environment 188; objects 190, 192 and 194 are objects of the application 196; and object 200 is a run-time object. The CDEFINE description of this operation is shown below: 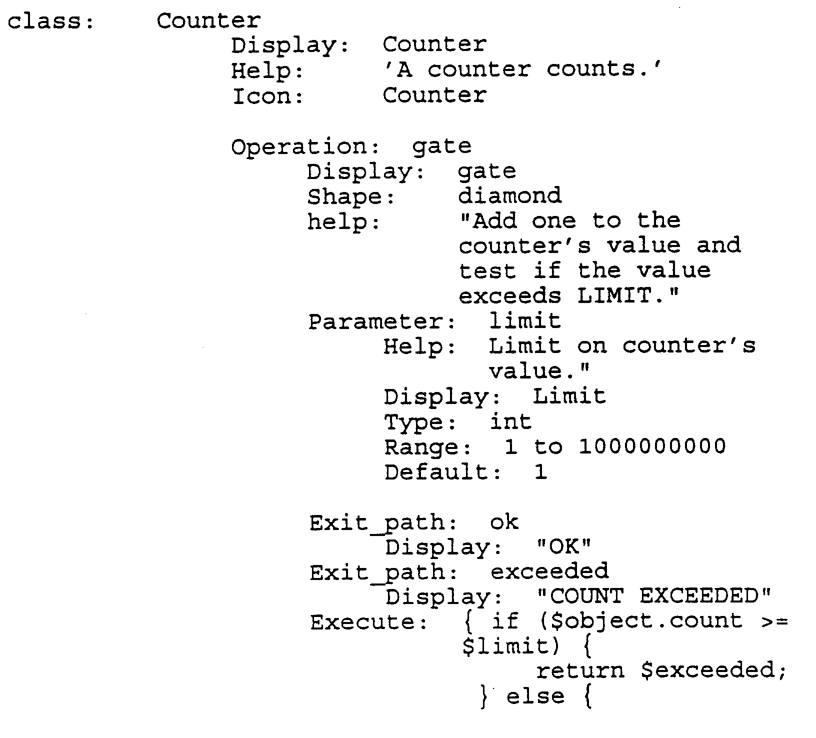 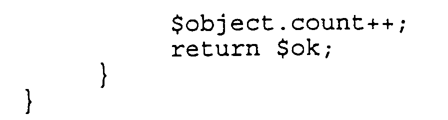
When the application is saved to a disk file, it is a representation of these objects that is written to disk. When the application is to be run, it runs in the context of the execution engine 168, into which has been linked the exact same environment and all its descriptors. The disk file representation of the objects is read in and the appropriate objects are once again created. The execution engine executes the application one operation at a time, beginning with the appropriate service entry point (one of the control flow operations). For each operation, the execution engine computes the values of any parameters, then asks the object representing the operation to execute the C++ code that was specified in the description given to CDEFINE. This code was put into a C++ member function of the C++ class that is the type of the objects used to represent this particular operation within this particular ADE class. The corresponding operation descriptor created an object of this C++ class type when the application developer chose this operation in the ADE.

Each operation object contains pointers to the next operation object along each exit path. The executing code returns an indication of which of the operation's exit paths should be followed, and this is used to select the next operation object to be executed.

As noted previously, the source code for an implementation of the ADE and execute engine are attached hereto.

## Claims

1. An application development system, comprising:
means for creating an operation list using flow diagrams of objects; and
means for executing code specified by the operations of the list.

2. A system as recited in claim 1, wherein the code preexists and said means for executing executes the preexisting code.

3. A system as recited in claim 1 or 2, wherein said means for creating allows a user to select graphical objects representing operations.

4. A system as recited in claim 3, wherein the graphical objects are displayed on a pallet.

5. A system as recited in any of the preceding claims. wherein said means for executing threads together execution of code using the list.

6. A distributed object platform, comprising:
a first computer including a first process and first data of a processing object designatable by a user; and
a second computer connected to said first computer and including a second process and second data of the processing object designatable by a user.

7. An application development process, comprising:
selecting graphical objects representing operations to be performed;
placing the objects within a flow diagram of an application to be performed;
generating a list of the operations of the application; and
executing precompiled code responsive to the list when the application is executed.

8. A distributed object method, comprising:
performing operations of a processing object in and on data of a first computer;
communicating a data request of the processing object by the first computer to a second computer;
performing operations of the processing object in and on data of the first computer responsive to the request and forwarding response data to the first computer; and
performing operations of the processing object in the first computer on the response data.
